(19) Europäisches Patentamt
European Patent Office
Office européen des brevets

(11) **EP 2 898 595 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **12773301.2**

(22) Anmeldetag: **11.10.2012**

(51) Int Cl.:
**H02M 3/335** (2006.01)

(86) Internationale Anmeldenummer:
**PCT/EP2012/070203**

(87) Internationale Veröffentlichungsnummer:
**WO 2014/056540 (17.04.2014 Gazette 2014/16)**

(54) **MODULAREN MULTILEVEL DC/DC WANDLER FÜR HVDC ANWENDUNGEN**

MODULAT MULTILEVEL DC/DC CONVERTER FOR HVDC APPLICATIONS

CONVERTISSEUR CC/CC MODULAIR MULTI-NIVEAUX POUR LES APPLICATIONS HAUTE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.07.2015 Patentblatt 2015/31**

(73) Patentinhaber: **Siemens Aktiengesellschaft 80333 München (DE)**

(72) Erfinder:
• **BAKRAN, Mark-Matthias 91052 Erlangen (DE)**
• **KNAAK, Hans-Joachim 91054 Erlangen (DE)**
• **SCHÖN, Andre 95447 Bayreuth (DE)**

(56) Entgegenhaltungen:
EP-A1- 2 458 725          WO-A1-2011/060812
WO-A1-2012/103936    US-A- 3 942 089
US-A1- 2012 170 338    US-B1- 6 519 169

• KNUDSEN L ET AL: "DESCRIPTION AND PROSPECTIVE APPLICATIONS OF NEW MULTI-TERMINAL HVDC SYSTEM CONCEPTS", CIGRE CONF. INTERNATIONALE DES GRANDS RESEAUX ELECTRIQUES, XX, XX, 26. August 1990 (1990-08-26), Seiten 1-11, XP000770178,

**Beschreibung**

Die Erfindung betrifft einen Gleichspannungsumwandler zum Verbinden von unterschiedliche Spannungen aufweisenden Hochspannungsgleichstromnetzen mit einem ersten Teilumrichter und einem zweiten Teilumrichter, die miteinander unter Ausbildung einer Umrichterreihenschaltung in Reihe geschaltet sind, wobei sich die Umrichterreihenschaltung zwischen den Gleichspannungsklemmen eines Gleichspannungsanschlusses und der zweite Teilumrichter sich zwischen den Gleichspannungsklemmen eines zweiten Gleichspannungsanschlusses erstreckt.

Eine solche Vorrichtung ist beispielsweise aus der WO 2010/145690 A1 bekannt. Dort sind zwei Teilumrichter offenbart, die miteinander in Reihe geschaltet sind, wobei jeder Teilumrichter ein einziges Phasenmodul aufweist, das aus in Reihe geschalteten zweipoligen Submodulen besteht. Die zweipoligen Submodule sind mit Leistungshalbleiterschalter und einem Kondensator ausgestattet, wobei je nach Ansteuerung der Leistungshalbleiterschalter entweder die an dem Kondensator abfallende Spannung oder aber eine Nullspannung am Ausgang eines jeden Submoduls erzeugt werden kann. Die in Reihe geschalteten Phasenmodule bilden einen ersten Gleichspannungsanschluss aus, mit dem eine ein erstes Gleichspannungsnetz verbindbar ist. Der zweite Gleichspannungsanschluss ist durch das Phasenmodul des zweiten Teilumrichters gebildet, wobei der negative Pol des ersten Gleichspannungsanschlusses gleichzeitig der negative Pol des zweiten Gleichspannungsanschlusses ist. Der vorbekannten Vorrichtung haftet der Nachteil an, dass die Gefahr besteht, dass im Dauerbetrieb die Kondensatoren der Submodule der Teilumrichter über ein zulässiges Maß hinaus aufgeladen werden.

Aus der WO 2010/115452 ist eine Vorrichtung zur Lastflusssteuerung von Gleichspannungsnetzen beschrieben. Diese Vorrichtung weist eine Längsspannungsquelle auf, die in Reihe in eine Gleichspannungsleitung des besagten Gleichspannungsnetzes geschaltet ist. Die Längsspannungsquelle wird durch zwei in Reihe geschaltete netzgeführte Umrichter realisiert, so dass die Verluste im Dauerbetrieb gering sind. Um die Spannung im Gleichspannungsnetz erhöhen zu können, ist der in Reihe in das Gleichspannungsnetz geschaltete Umrichter wechselspannungsseitig über einen ersten Transformator, einem Wechselspannungsnetz und einen zweiten Transformator mit dem Wechselspannungsanschluss eines parallel an das Gleichspannungsnetz angeschlossenen Umrichters verbunden. Der parallel an das Gleichspannungsnetz angeschlossene Umrichter kann auch als Querspannungsquelle bezeichnet werden. Die Querspannungsquelle stellt die zur Versorgung der Längsspannungsquelle erforderliche Energie bereit. Auf diese Weise ist eine Lastflusssteuerung durch Erhöhen der Spannung im Gleichspannungsnetz ermöglicht.

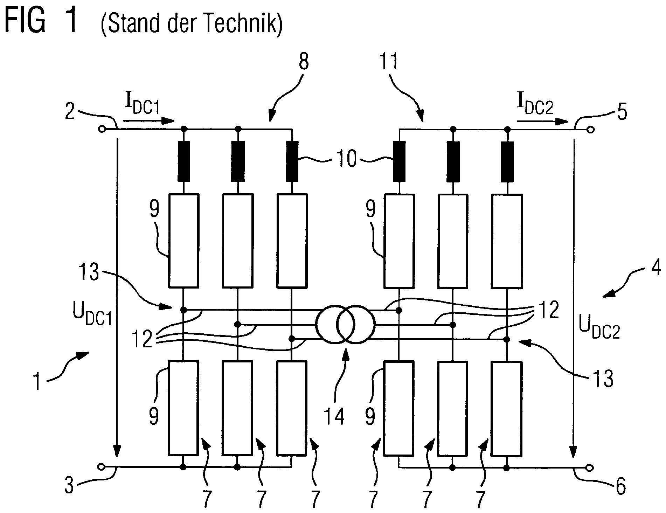

Weiterer Stand der Technik zum Verbinden von Hochspannungsgleichstromnetzen, die auf unterschiedlichen Spannungsniveaus liegen, ist beispielhaft in der Figur 1 verdeutlicht. Der dort gezeigte Gleichspannungswandler weist zum Anschluss des ersten Hochspannungsgleichstromnetzes einen ersten Gleichspannungsanschluss 1 auf, der eine positive Gleichspannungsklemme 2 sowie eine negative Gleichspannungsklemme 3 ausbildet. Zum Anschluss eines zweiten Hochspannungsgleichstromnetzes mit einer geringeren Nenngleichspannung ist ein zweiter Gleichspannungsanschluss 4 vorgesehen, der wieder eine positive Gleichspannungsklemme 5 sowie eine negative Anschlussklemme 6 aufweist. Zwischen der positiven Gleichspannungsklemme 2 des Gleichspannungsanschlusses 1 und der negativen Anschlussklemme 3 erstrecken sich drei Phasenmodule 7 eines ersten Teilumrichters 8. Dabei besteht ein Phasenmodul aus zwei in Reihe miteinander geschalteten Umrichterarmen 9 sowie einer Induktivität 10 in Gestalt von Spulen. Ferner ist ein zweiter Teilumrichter 11 vorgesehen, der ebenfalls drei Phasenmodule 7 aufweist, die jeweils aus zwei in Reihe geschalteten Umrichterarmen 9 und einer Induktivität 10 zusammengesetzt sind. Jedes Phasenmodul 7 bildet zwei Gleichspannungsanschlüsse aus, die einmal die positiven Anschlussklemme 5 sowie die negative Anschlussklemme 6 des zweiten Gleichspannungsanschlusses 4 bilden. Der Potentialpunkt zwischen den Umrichterarmen 9 bildet eine Wechselspannungsphase 12 eines Wechselspannungsanschlusses 12 des jeweiligen Umrichters 8 bzw. 11 aus. Die beiden Wechselspannungsanschlüsse 12 sind über einen dreiphasigen Transformator 14 miteinander verbunden. Dabei können die Wicklungen des besagten Transformators 14 auf beliebige Art und Weise, also beispielsweise in Dreiecks- oder Sternschaltung miteinander verbunden sein.

Gemäß dieser vorbekannten Vorrichtung wird die Gleichspannung des ersten Gleichspannungsnetzes zunächst über den ersten Teilumrichter 8 in eine Wechselspannung überführt, über den Transformator 14 auf die jeweils benötigte Spannungsebene transformiert und anschließend wieder durch den Teilumrichter 11 in die gewünschte Gleichspannung umgewandelt.

Eine Vorrichtung dieser Art ist beispielsweise auch aus der EP 2 458 725 A1 bekannt.

In dem Beitrag von Knudsen et al. "Description and Perspective Applications of New Multilevel-Terminal HVDC System Concepts", CIGRE CONF. 1990 ist ein Multiterminal-HGÜ-System mit zwei unterschiedlichen Gleichspannungsniveaus offenbart. Die Spannungsübersetzung zwischen den beiden Gleichspannungsniveaus wird mittels einer artgemäßen Reihenschaltung zweier selbstgeführter Zwischenkreisumrichter (VSC) erreicht. Die Wechselspannungsanschlüsse der beiden Umrichter sind miteinander sowie mit einem Wechselspannungsnetz mittels Transformatoren verbunden.

Aus der Druckschrift US 3 942 089 A ist eine Vorrichtung zur Umwandlung einer ersten in eine zweite Gleichspannung bekannt. Die Vorrichtung umfasst vier Thyristor-Teilumrichter, die in einer Reihenschaltung angeordnet sind.

Die Wechselspannungsanschlüsse der Teilumrichter sind miteinander mittels Transformatoren verbunden. Die Reihenschaltung erstreckt sich zwischen zwei Polen eines oberspannungsseitigen Gleichspannungsanschlusses. Ein erster Pol eines unterspannungsseitigen Gleichspannungsanschlusses ist zwischen dem ersten und dem zweiten Teilumrichter und ein zweiter Pol des unterspannungsseitigen Gleichspannungsanschlusses zwischen dem dritten und dem vierten Teilumrichter angeordnet.

Ein modularer Mehrstufenumrichter, der als Teilumrichter 8 und/oder 11 des Gleichspannungswandlers der Figur 1 eingesetzt werden kann, ist in der WO 2012/103936 A1 offenbart.

Weitere Umrichter zur Umwandlung von Gleichspannung in Wechselspannung und umgekehrt sind aus der US 6 519 169 B1 und der US 2012/0170338 A1 bekannt.

Weitere DC-DC-Wandler sind in der WO 2011/060812 A1 offenbart.

Gleichspannungswandler für kleine bis mittlere Energien sind ebenfalls hinreichend bekannt. In diesem Zusammenhang sind Hoch- oder Tiefsetzsteller zu nennen, die mit Spulen und Kondensatoren ausgerüstet sind, wobei Leistungshalbleiterschalter für eine kurzzeitige Unterbrechung eines Stromflusses sorgen. Die Leistungshalbleiter der bekannten Hoch- oder Tiefsetzsteller würden jedoch im Hochspannungsbereich so stark belastet, dass bereits nach kurzer Zeit irreparable Schäden auftreten könnten.

Aufgabe der Erfindung ist es, einen Gleichspannungswandler der eingangs genannten Art bereitzustellen, der auch für den Dauerbetrieb geeignet ist.

Die Erfindung löst diese Aufgabe dadurch, dass der erste Teilumrichter und der zweite Teilumrichter über Leistungsaustauschmittel miteinander verbunden sind, so dass der Austausch von elektrischer Leistung zwischen dem ersten Teilumrichter und dem zweiten Teilumrichter über die Leistungsaustauschmittel ermöglicht ist.

Im Rahmen der Erfindung ist ein Gleichspannungswandler bereitgestellt, der eine Reihenschaltung von zwei Teilumrichtern aufweist. Diese Umrichterreihenschaltung bildet zwei Gleichspannungsanschlüsse aus, die jeweils mit einer Gleichspannungsklemme verbunden sind. Diese Verbindung erfolgt beispielsweise über eine geeignete Induktivität. Die Gleichspannungsklemmen bilden gemeinsam einen ersten Gleichspannungsanschluss aus, an den ein erstes Gleichspannungsnetz anschließbar ist. Ein zweites Gleichspannungsnetz ist mit dem zweiten Gleichspannungsanschluss des Gleichspannungswandlers verbindbar, so dass das zweite Gleichspannungsnetz mit den Gleichspannungsanschlüssen eines einzelnen Teilumrichters verbunden ist. Da die Spannungsfestigkeit der Reihenschaltung zweiter Teilumrichter größer ist als die Spannungsfestigkeit eines einzelnen Teilumrichters der Reihenschaltung kann das erste Gleichspannungsnetz eine Betriebsspannung aufweisen, die größer ist als die Betriebsspannung des zweiten Gleichspannungsnetzes. Der erste Gleichspannungsanschluss kann daher auch als Oberspannungsseite und der zweite Gleichspannungsanschluss als Unterspannungsseite bezeichnet werden. Im Rahmen der Erfindung wurde erkannt, dass beim Dauerbetrieb der Teilumrichter elektrische Leistung zu- oder abgeführt werden muss. Ansonsten müsste die jedem Teilumrichter zugeführte Leistung im Mittel gleich Null sein. Dies ist in der Praxis jedoch nicht möglich. Erfindungsgemäß sind daher Leistungsaustauschmittel vorgesehen, über die die beiden Teilumrichter ebenfalls miteinander verbunden sind. Somit können die Teilumrichter elektrische Leistung miteinander austauschen, so dass es im Rahmen der Erfindung auch bei fortlaufendem Betrieb des Gleichspannungswandlers Fehler oder Ausfälle von Komponenten weitestgehend vermieden sind. Überschüssige Leistung, die am ersten Teilumrichter abfällt, der sich zwischen der positiven Gleichspannungsklemme des ersten Gleichspannungsanschlusses und der positiven Gleichspannungsklemme des zweiten Gleichspannungsanschlusses erstreckt, wird erfindungsgemäß über die Leistungsaustauschmittel zur Unterspannungsseite, also zum zweiten Teilumrichter übertragen, der sich zwischen den Gleichspannungsklemmen des zweiten Gleichspannungsanschlusses erstreckt. Der zweite Teilumrichter speist diese Leistung in das am zweiten Gleichspannungsanschluss angeschlossene Gleichspannungsnetz ein. Im Rahmen der Erfindung ist ein Leistungsfluss in beiden Richtungen also von der Oberspannungsseite zur Unterspannungsseite oder umgekehrt möglich. Auch sind im Rahmen der Erfindung beliebige Übersetzungsverhältnisse realisierbar.

Die Topologie, also der Aufbau und die Komponenten der Teilumrichter, sind im Rahmen der Erfindung grundsätzlich beliebig. Zweckmäßigerweise handelt es sich jedoch bei den Teilumrichtern um selbstgeführte Umrichter, die also mit Leistungshalbleiterschaltern ausgerüstet sind, die sowohl aktiv einals auch abgeschaltet werden können. Abweichend hiervon ist nur der zweite Teilumrichter ein selbstgeführter Umrichter. Die Umrichter weisen vorteilhafterweise eine Reihenschaltung von zweipoligen Submodulen auf. Die Ausgestaltung der Submodule ist im Rahmen der Erfindung grundsätzlich beliebig. So weist ein Submodul beispielsweise lediglich einen Leistungshalbleiterschalter, wie beispielsweise einen Thyristor, GTO, IGBT, IGCT oder dergleichen auf, dem bei abschaltbaren Leistungshalbleiterschaltern beispielsweise eine Freilaufdiode gegensinnig parallel geschalt ist. Alternativ kommen rückwärts leitfähige Leistungshalbleiterschalter in Betracht. Eine Reihenschaltung dieser Submodule ist notwendig, da die Spannungsfestigkeit eines einzelnen Submoduls in der Regel nicht ausreichend ist, um die im Rahmen der Hochspannungsgleichstromübertragung anfallenden Spannungen sicher aufnehmen zu können. Aus diesem Grunde weist jeder Teilumrichter im Rahmen der Erfindung eine Vielzahl von Submodulen, beispielsweise etwa 100 oder 300 auf, die in Reihe geschaltet sind. Die Teilumrichter können darüber hinaus auch induktive Elemente zur Begrenzung der maximalen Ströme aufweisen, die über die Teilumrichter fließen können. Selbstverständlich können im Rahmen der Erfindung auch Beschaltungsnetzwerke vorgesehen sein, wenn Leistungshalbleiter eingesetzt werden, die nicht hart geschaltet werden können.

Vorteilhafterweise weist jeder Teilumrichter einen Wechselspannungsanschluss auf, wobei der Wechselspannungsanschluss des ersten Teilumrichters mit dem Wechselspannungsanschluss des zweiten Teilumrichters über die Leistungsaustauschmittel verbunden ist. Mit dieser vorteilhaften Weiterentwicklung wird die Gleichspannung der an den Gleichspannungswandler angeschlossenen Gleichspannungsnetze in Wechselspannung umgewandelt, wobei die Leistungsaustauschmittel die Wechselspannungen auf bekannte Art und Weise in die erforderlichen Spannungslevel umwandeln.

Vorteilhafterweise sind die Leistungsaustauschmittel daher als Transformator ausgebildet. Der Aufbau des Transformators kann grundsätzlich beliebig sein. So können übliche Transformatoren mit galvanisch getrennten Wicklungen eingesetzt werden, die auf zweckmäßige Art und Weise induktiv miteinander gekoppelt sind. Abweichend davon kann jedoch auch ein Spartransformator eingesetzt werden. Bei einem Spartransformator wird auf eine galvanische Trennung der Wicklungen verzichtet. Es wird an Stelle eines Wicklungspaares lediglich eine Wicklung eingesetzt, die eine Anzapfung aufweist. Ein solcher Spartransformator kann daher auch als induktiver Spannungsteiler betrachtet werden. Zwischen dem Spartransformator und den Wechselspannungsanschlüssen der Teilumrichter sind vorteilhafterweise Mittel zum Trennen von Gleichspannungspotentialen wie beispielsweise Kondensatoren angeordnet.

Zweckmäßigerweise weist der Transformator eine Primärwicklung, die mit dem Wechselspannungsanschluss des ersten Teilumrichters verbunden ist, und eine Sekundärwicklung auf, die mit dem Wechselspannungsanschluss des zweiten Teilumrichters verbunden ist.

Durch einen solchen Transformator wird die in der Primärwicklung abfallende Wechselspannung auf eine niedrigere Wechselspannung auf der Sekundärseite transformiert.

Gemäß einer vorteilhaften Weiterentwicklung weist jeder Teilumrichter wenigstens ein Phasenmodul auf, das zwei in Reihe geschaltete Umrichterarme ausbildet, wobei der Potentialpunkt zwischen den Umrichterarmen eines jeden Phasenmoduls eine Wechselspannungsphase eines Wechselspannungsanschlusses ausbildet. Gemäß dieser vorteilhaften Weiterentwicklung werden Umrichter eingesetzt, die beispielsweise zu einer so genannten Graetzbrücke miteinander verbundene Umrichterarme oder Umrichterzweige ausbilden. Dabei erstreckt jeder Umrichterarm zwischen einem Gleichspannungsanschluss und dem Wechselspannungsanschluss. In dem Umrichterarm oder dem Phasenmodul sind beispielsweise Induktivitäten in Gestalt von Drosselspulen angeordnet. Teilumrichter mit Brückenschaltungen dieser Art sind in der Hochspannungsgleichstromübertragung bereits bekannt, so dass bei der Anpassung der Topologie an die jeweiligen Erfordernisse auf Erfahrungen zurückgegriffen werden kann.

Bei einer Variante der Erfindung weist jeder Teilumrichter drei Phasenmodule auf, deren Wechselspannungsanschlüsse über einen dreiphasigen Transformator miteinander verbunden sind. Der dreiphasige Transformator weist daher drei Primärwicklungen auf, die mit drei Sekundärwicklungen gekoppelt sind. Die Sekundärwicklungen bzw. die Primärwicklungen können beliebig miteinander verschaltet sein. So ist beispielsweise eine geerdete Sternpunktanordnung oder eine Dreiecksschaltung im Rahmen dieser Weiterentwicklung der Erfindung möglich.

Bei einer hiervon abweichenden Variante weist zumindest ein Teilumrichter zwei Phasenmodule auf, deren Wechselspannungsanschluss über einen einphasigen Transformator mit dem Wechselspannungsanschluss des anderen Teilumrichters gekoppelt ist. Gemäß dieser vorteilhaften Weiterentwicklung können gegenüber der vorher dargestellten Variante mit einem dreiphasigen Transformator erhebliche Kosten eingespart werden. So sind hier lediglich zwei Phasenmodule für jeden Teilumrichter notwendig. Anstelle eines dreiphasigen Transformators wird ein wesentlich kostengünstigerer einphasiger Transformator eingesetzt. Die Primärwicklung des besagten Transformators weist zwei Anschlussklemmen auf, wobei die eine Anschlussklemme mit der Wechselspannungsphase des ersten Phasenmoduls und die andere Anschussklemme mit der Wechselspannungsphase des zweiten Phasenmoduls des ersten Teilumrichters verbunden ist. Ein entsprechender Anschluss kann sich auch für den zweiten Teilumrichter ergeben, so dass seine beiden Phasenmodule wechselspannungsseitig jeweils mit einer Anschlussklemme der Sekundärwicklung verbunden sind.

Bei einer diesbezüglichen Weiterentwicklung weist jeder oder zumindest einer der Teilumrichter jeweils ein Phasenmodul auf, dessen Wechselspannungsphase einer Kondensatorhilfsphase zugeordnet ist, die über einen Kondensator mit einem Pol des ersten oder zweiten Gleichspannungsanschlusses verbunden ist, wobei die besagte Wechselspannungsphase und die diesem zugeordnete Kondensatorhilfsphase über eine Wicklung eines einphasigen Transformators miteinander verbunden sind. Gemäß dieser Variante der Erfindung ist eine Anschlussklemme der Primärwicklung und eine Anschlussklemme der Sekundärwicklung des einphasigen Transformators jeweils mit einer Wechselspannungsphase des ersten Teilumrichters bzw. zweiten Teilumrichters verbunden. Die andere Anschlussklemme der jeweiligen Wicklung des einphasigen Transformators ist an die Kondensatorhilfsphase angeschlossen. Die Kondensatorhilfsphase ist über einen Kondensator oder vergleichbare kapazitive Mittel mit einem Pol des angeschlossenen Gleichspannungsnetzes oder einer Klemme eines Gleichspannungsanschlusses verbunden. Durch die Kondensatorhilfsphase ist somit ein Hilfspotential erzeugbar, so dass der jeweilige Teilumrichter mit seinem einzigen Phasenmodul an dessen Wechselspannungsphase bezüglich des Potentials der Kondensatorhilfsphase eine Wechselspannung erzeugen kann.

Wie bereits ausgeführt wurde ist es zweckmäßig, dass im Rahmen der Erfindung wenigstens ein Teilumrichter ein selbstgeführter Umrichter ist, der ein- und abschaltbare Leistungshalbleiterschalter aufweist. Gemäß einer bevorzugten Variante sind sowohl der erste Teilumrichter als auch der zweite Teilumrichter jeweils ein selbstgeführter Umrichter. Abweichend davon ist der erste Teilumrichter ein fremd geführter Umrichter, der beispielsweise Thyristoren aufweist, die ein- aber nicht abschaltbar sind.

Gemäß der Erfindung sind sowohl der erste Teilumrichter als auch der zweite Teilumrichter oder aber einer der beiden Teilumrichter als so genannter modularer Mehrstufenumrichter ausgestaltet, der Umrichterarme mit einer Reihenschaltung von zweipoligen Submodulen aufweist, wobei jedes Submodul mit wenigstens einem Energiespeicher und Leistungshalbleiterschaltern ausgerüstet ist. Die Leistungshalbleiterschalter sind so genannte ein- und abschaltbare Leistungshalbleiterschalter. Dabei ist zweckmäßigerweise jedem der abschaltbaren Leistungshalbleiterschalter eine Freilaufdiode gegensinnig parallel geschaltet. Abweichend hiervon können jedoch auch rückwärts leitende Leistungshalbleiterschalter zum Einsatz gelangen.

Solche Submodule können beispielsweise eine so genannte Vollbrückenschaltung und/oder aber eine Halbbrückenschaltung ausbilden.

Eine Halbbrückenschaltung verfügt über eine Reihenschaltung aus zwei Leistungshalbleiterschaltern, die einem Energiespeicher parallel gespeichert ist. Eine Anschlussklemme des Submoduls ist mit einem Pol des Energiespeichers und die andere Anschlussklemme des Submoduls mit dem Potentialpunkt zwischen den Leistungshalbleiterschaltern verbunden.

Eine Vollbrückenschaltung weist zwei solcher Reihenschaltungen auf, die beide dem Kondensator oder Energiespeicher des Submoduls parallel geschaltet sind. Bei einer Vollbrückenschaltung ist die erste Anschlussklemme mit dem Potentialpunkt zwischen den Leistungshalbleiterschaltern der ersten Reihenschaltung und die zweite Anschlussklemme mit dem Potentialpunkt zwischen den Leistungshalbleiterschaltern der zweiten Reihenschaltung verbunden.

Darüber hinaus können die Submodule auch eine so genannte Doppelmodulschaltung ausbilden, die beispielsweise in der WO 2011/067120 offenbart ist und auf deren Aufbau später noch genauer eingegangen werden wird. Submodule mit Voll- oder Doppelmodulschaltungen sind bidirektional sperrfähige Submodule.

Gemäß einer weiteren Ausgestaltung der Erfindung weist jeder Umrichterarm des ersten Teilumrichters sowohl bidirektionale sperrfähige Submodule als auch Submodule mit Halbbrückenschaltung auf. Ein Submodul in Halbbrückenschaltung hat gegenüber einem Submodul in Vollbrückenschaltung oder Doppelmodulschaltung den Vorteil, dass die Verluste aufgrund der geringeren Anzahl von Leistungshalbleiterschaltern - zwei gegenüber von vier Leistungshalbleiterschaltern - verringert sind. Selbstverständlich sind Halbbrückenschaltungen auch kostengünstiger als Vollbrückenschaltungen. Vollbrückenschaltungen und Doppelmodulschaltungen weisen jedoch den Vorteil auf, dass der Stromfluss in beiden Richtungen über das jeweilige Submodul kontrolliert werden kann. Bei einer Halbbrückenschaltung kann hingegen ein Kurzschlussstrom ungehindert über die zwischen der ersten und zweiten Anschlussklemme angeordnete Freilaufdiode fließen. Wie Submodule in Vollbrückenschaltungen können auch Submodule in Doppelmodulschaltung den Stromfluss in beiden Richtungen kontrollieren. Der gemischte Einsatz von Voll- und Halbbrückensubmodulen oder Doppelmodulen und Halbbrückenmodulen stellt einen Kompromiss zwischen geringen Verlusten und Kosten auf der einen Seite und gleichzeitig dem Schutz vor beispielsweise hohen Kurzschlussströmen dar, die durch entsprechende Ansteuerung der Vollbrückensubmodule am Durchfluss durch den Gleichspannungswandler gehindert werden können. Gemäß dieser vorteilhaften Weiterentwicklung ist somit ein Gleichspannungswandler bereitgestellt, der das Fließen eines Kurzschlussstromes von dem einen Gleichspannungsnetz in das andere Gleichspannungsnetz verhindert.

Gemäß einer Weiterentwicklung weist der zweite Teilumrichter Phasenmodule auf, die ausschließlich aus einer Halbbrückenschaltung bestehen wobei das Übersetzungsverhältnis ü gleich oder größer als 2 ist. Ein solcher Gleichspannungswandler kann einen Kurzschluss im Gleichspannungsnetz, das am zweiten Gleichspannungsanschluss angeordnet ist, sicher isolieren.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei

| | |
|---|---|
| Figur 1 | ein Ersatzschaltbild eines Gleichspannungswandlers gemäß dem Stand der Technik, |
| Figur 2 | ein Ersatzschaltbild eines Ausführungsbeispiels des erfindungsgemäßen Gleichspannungswandlers, |
| Figuren 3 bis 7 | weitere Ausführungsbeispiele des erfindungsgemäßen Gleichspannungswandlers, |
| Figur 8 | den Gleichspannungswandlers gemäß Figur 2, der zum Blockieren eines Kurzschlussstroms am zweiten Gleichspannungsanschluss eingerichtet ist, |
| Figur 9 | den Gleichspannungswandler gemäß Figuren 2 und 8, der am ersten Gleichspannungsanschluss eingerichtet ist zum Blockieren eines Kurzschlussstromes, |
| Figuren 10 bis 11 | Ersatzschaltbilder von Submodulen für einen erfindungsgemäßen Gleichspannungswandler, |
| Figur 13 | ein Ausführungsbeispiel eines Umrichterarms für einen erfindungsgemäßen Gleichspannungs- |

wandler und

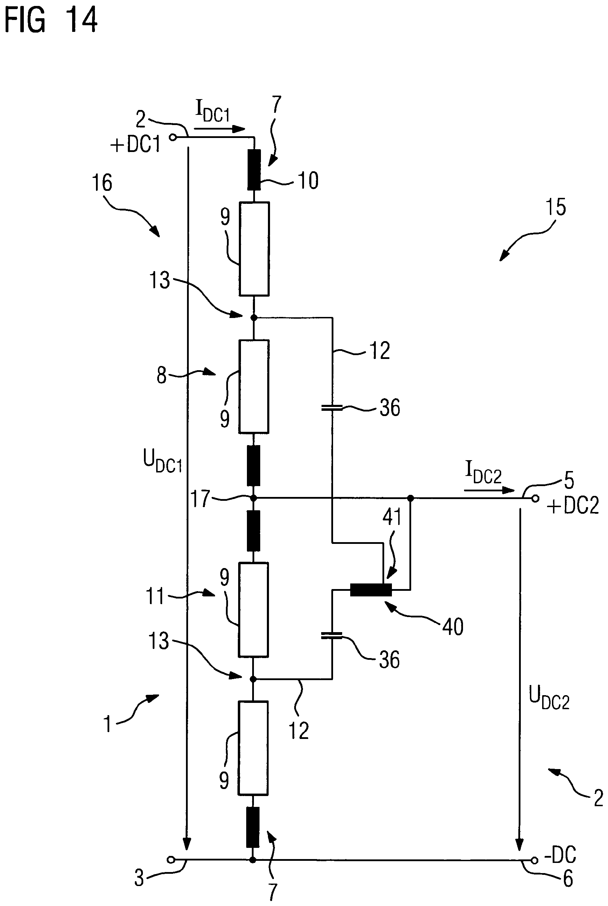

Figur 14      ein weiteres Ausführungsbeispiel des erfindungsgemäßen Gleichspannungswandlers zeigen.

Figur 1 zeigt ein Ersatzschaltbild eines Gleichspannungswandlers gemäß dem Stand der Technik, der bereits eingangs beschrieben wurde.

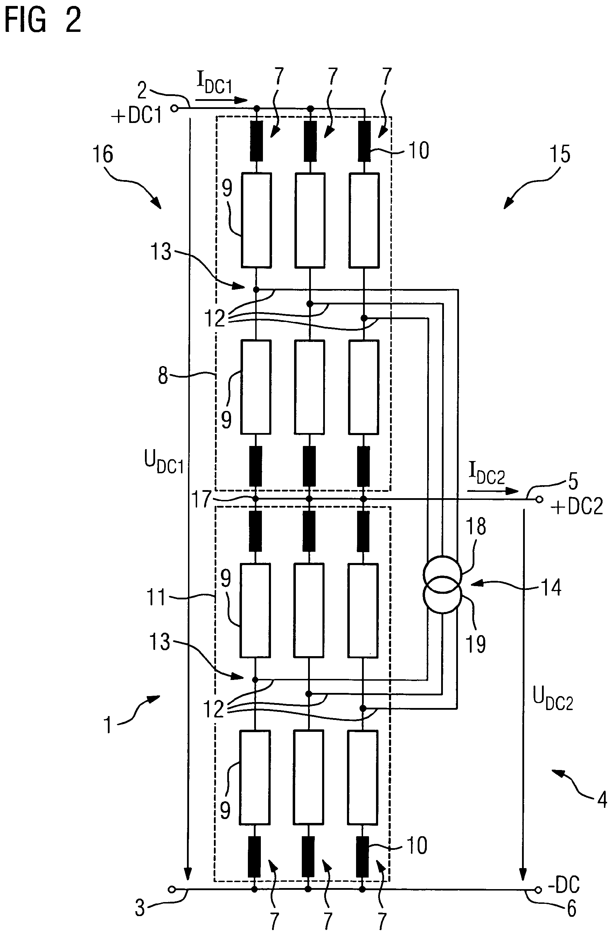

Figur 2 zeigt ein Ersatzschaltbild eines Ausführungsbeispiels eines erfindungsgemäßen Gleichspannungswandlers 15, der einen ersten Gleichspannungsanschluss 1 mit einer positiven Gleichspannungsklemme 2 und einer negativen Gleichspannungsklemme 3 aufweist. Ferner ist ein zweiter Gleichspannungsanschluss 4 mit einer positiven Gleichspannungsklemme 5 sowie einer negativen Gleichspannungsklemme 6 vorgesehen. Die Gleichspannungsklemme 6 liegt auf dem gleichen Potential wie die Gleichspannungsklemme 3 des ersten Gleichspannungsanschlusses 1. Der gezeigte Gleichspannungswandler 15 umfasst ferner einen ersten Teilumrichter 8 sowie einen zweiten Teilumrichter 11, die miteinander in Reihe geschaltet sind und eine Umrichterreihenschaltung 16 ausbilden, wobei der erste Teilumrichter 8 gleichspannungsseitig über Induktivitäten 10 mit der positiven Gleichspannungsklemme 2 des ersten Gleichspannungsanschlusses 1 und mit der positiven Gleichspannungsklemme 5 des zweiten Gleichspannungsanschluss 4 verbunden ist. Der zweite Teilumrichter 11 ist gleichspannungsseitig ebenfalls über Induktivitäten 10 mit der positiven Gleichspannungsklemme 5 des zweiten Gleichspannungsanschluss 4 und mit der negativen Gleichspannungsklemme 3 des ersten Gleichspannungsanschlusses 1 verbunden ist. Die Umrichterreihenschaltung 16 erstreckt sich zwischen den Gleichspannungsklemmen 2, 3 des ersten Gleichspannungsanschlusses 1. Zwischen den Gleichspannungsklemmen 5, 6 des zweiten Gleichspannungsanschlusses 4 erstreckt sich der zweite Teilumrichter 11 mit seinen Phasenmodulen 7. Jedes Phasenmodul umfasst zwei Induktivitäten 10 in Gestalt von Spulen.

Die Induktivitäten 10 werden hierbei als Komponenten des Phasemoduls 7 und somit des Teilumrichters 8 bzw. 11 betrachtet. Der erste Gleichspannungsanschluss 1 dient zum Anschluss eines ersten Gleichspannungsnetzes mit der Nenngleichspannung $U_{DC1}$. Der zweite Gleichspannungsanschluss dient zum Anschluss eines zweiten Gleichspannungsnetzes mit der Nennspannung $U_{DC2}$. Die Nenngleichspannung des ersten Gleichspannungsnetzes $U_{DC1}$ ist hier drei mal so hoch wie die Nenngleichspannung des zweiten Gleichspannungsnetzes $U_{DC2}$ ($U_{DC1} = 3 * U_{DC2}$). Das Übersetzungsverhältnis ü des Gleichspannungswandlers 15 ist somit gleich 3. Während des Betriebs des Gleichspannungswandlers 15 fällt somit die Spannung des zweiten Gleichspannungsnetzes an dem zweiten Teilumrichter 11 ab. Die positive Gleichspannungsklemme 5 des zweiten Gleichspannungsanschlusse 4 liegt auf dem Gleichspannungspotentialpunkt 17 zwischen dem ersten Teilumrichter 8 und dem zweiten Teilumrichter 11.

Die Topologie des ersten Teilumrichters 8 kann der Topologie des zweiten Teilumrichters 11 im Wesentlichen entsprechen. Um jedoch Kurzschlüsse im ersten Gleichspannungsnetz blockieren und gleichzeitig möglichst verlustarm arbeiten zu können, weicht der Aufbau der Teilumrichter bei einer bevorzugten Variante der Erfindung voneinander ab.

In Figur 2 umfassen der erste Teilumrichter 8 und der zweite Teilumrichter 11 jeweils drei Phasenmodule 7, wobei jedes Phasenmodul über eine Reihenschaltung von Umrichterarmen 9 verfügt. Der Potentialpunkt zwischen den Umrichterarmen 9 eines Phasenmoduls 7 entspricht einer Wechselspannungsphase 12 eines Wechselspannungsanschlusses 13 des ersten Teilumrichters 8 bzw. zweiten Teilumrichters 11. Dabei sind die Wechselspannungsphasen 12 des ersten Teilumrichters 8 jeweils mit einer Primärwicklung 18 eines dreiphasigen Transformators 14 als Leistungsaustauschmittel galvanisch verbunden. Die Wechselspannungsphasen 12 des Wechselspannungsanschlusses 13 des zweiten Teilumrichters 11 sind hingegen mit der Sekundärwicklung 19 des Transformators 14 verbunden. Durch die induktive Kopplung der Wicklungen 18, 19 ist ein Leistungsaustausch zwischen dem ersten Teilumrichter 8 und dem zweiten Teilumrichter 11 ermöglicht. Hierbei werden die Teilumrichter 8 und 11 so angesteuert, dass sich ein Leistungsfluss von dem am ersten Teilumrichter 8 zum zweiten Teilumrichter 11 einstellt, der die Leistung dann in das am zweiten Gleichspannungsanschluss 4 anliegende Gleichspannungsnetz einleitet.

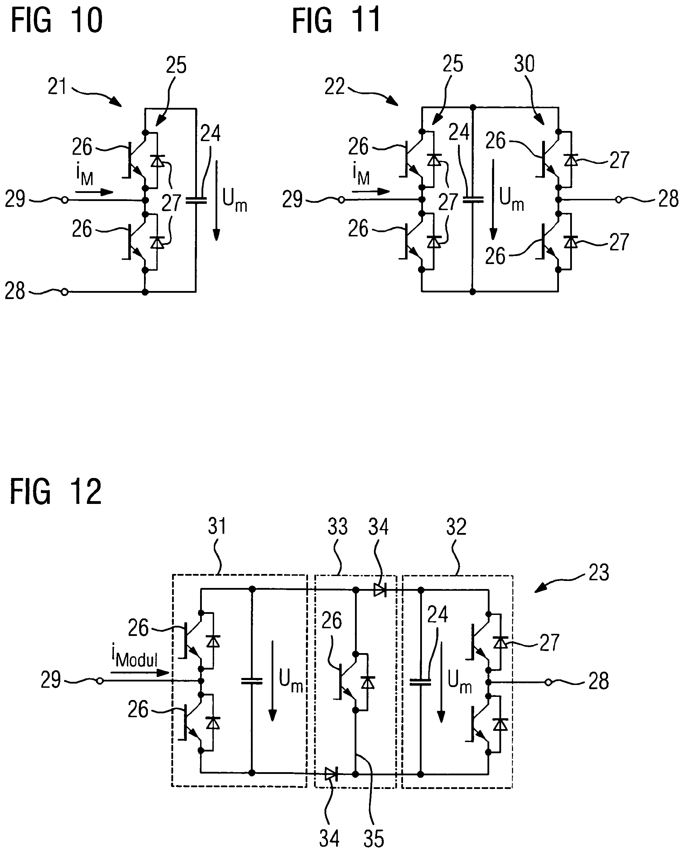

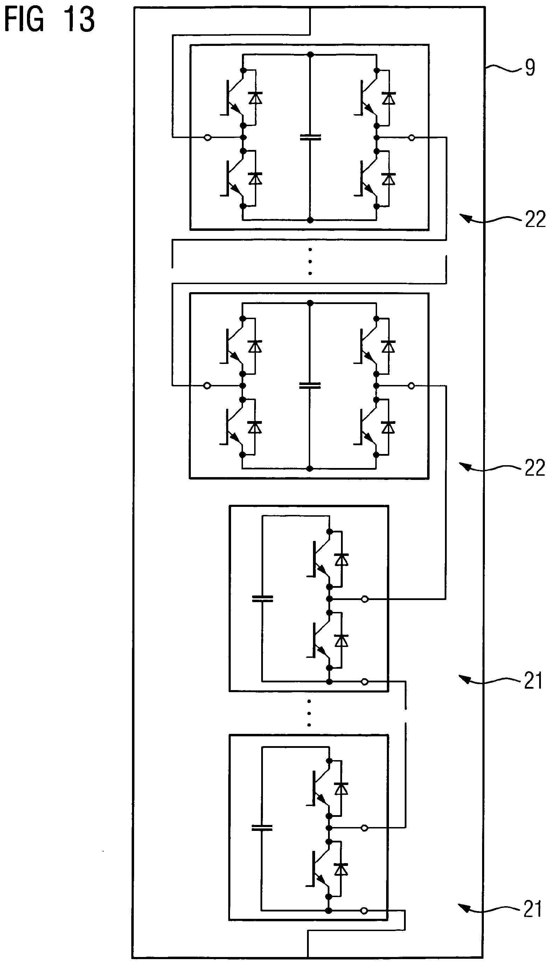

Bei den Teilumrichtern 8 und 11 handelt es sich bei dem in Figur 2 gezeigten Ausführungsbeispiel jeweils um einen so genannten modularen Mehrstufen-Umrichter, mit Umrichterarmen 9, die zu einer so genannten Graetz-Brücke verschaltet sind. Dabei weist jeder Umrichterarm 9 eine Reihenschaltung aus zweipoligen Submodulen auf, die beispielhaft in den Figuren 10 bis 12 dargstellt sind. Die Umrichterarme 9 des Teilumrichters 8 sind in Figur 13 dargestellt. Dort ist erkennbar, dass jeder Umrichterarm 9 eine Reihenschaltung von unterschiedlichen zweipoligen Submodulen 20 und 21 aufweist, deren Aufbau in den Figuren 10 bzw. 11 verdeutlicht ist. Eine weitere Ausgestaltung eines Submoduls 23, das im Rahmen der Erfindung Teil einer Reihenschaltung eines Umrichterarms 9 sein kann, um in einem erfindungsgemäßen Gleichspannungswandler 15 eingesetzt zu werden, zeigt Figur 12.

Bei dem in Figur 10 verdeutlichten Submodul 21 handelt es sich um eine so genannte Halbbrückenschaltung. Es ist erkennbar, dass dieses Submodul 21 einen Energiespeicher 24 in Gestalt eines unipolaren Kondensators 24 aufweist. Dem Kondensator 24 ist eine Reihenschaltung 25 aus zwei Leistungshalbleiterschaltern 26, hier IGBTs, parallel geschaltet, wobei jedem IGBT 26 eine Freilaufdiode 27 gegensinnig parallel geschaltet ist. Eine erste Submodulanschlussklemme 28 des Submoduls 21 ist mit einem Pol des Kondensators 24 verbunden, wohingegen eine zweite Submodulanschlussklemme 29 mit dem Potentialpunkt zwischen den IGBTs 26 verbunden ist. Je nach Ansteuerung der Leistungshalbleiterschalter 26 kann somit die an dem Kondensator 24 abfallende Spannung $U_m$ oder aber eine

Nullspannung erzeugt werden.

Figur 11 zeigt ein weiteres Ausführungsbeispiel eines Submoduls 22, das ebenfalls einen Energiespeicher 24 in Gestalt eines Kondensators aufweist, an dem eine unipolare Spannung $U_m$ abfällt. Auch hier ist eine erste Reihenschaltung 25 von zwei IGBTs 26 vorgesehen, wobei jedem IGBT 26 wieder eine Freilaufdiode 27 gegensinnig parallel geschaltet ist. Darüber hinaus ist jedoch auch eine zweite Reihenschaltung 30 vorgesehen, die dem Kondensator 24 ebenfalls parallel geschaltet ist. Auch die zweite Reihenschaltung 30 weist zwei in Reihe geschaltete IGBTs 26 auf, denen jeweils eine Freilaufdiode 27 gegensinnig parallel geschaltet ist. Die erste Submodulanschlussklemme 29 ist wieder mit dem Potentialpunkt zwischen den IGBTs 26 der ersten Reihenschaltung 25 verbunden, wobei der Potentialpunkt zwischen den IGBTs 26 der zweiten Reihenschaltung 30 die zweite Anschlussklemme 28 ausbildet. Mit einer Vollbrückenschaltung kann an den beiden Anschlussklemmen 26 und 28 einmal die an die dem Energiespeicher 24 abfallende Spannung $U_m$ eine Nullspannung oder aber die inverse Kondensatorspannung $-U_m$ erzeugt werden.

Darüber hinaus kann mit der Vollbrückenschaltung 22 gemäß Figur 11 der Stromfluss zwischen den Anschlussklemmen 26 und 28 in beiden Richtungen gezielt gesteuert werden. Anders ausgedrückt kann bei einem Kurzschluss in beiden Richtungen mit Hilfe eines Vollbrückenmoduls 22 ein Gegenpotential aufgebaut werden, das zur Unterdrückung des Kurzschlussstromes einsetzbar ist. Bei einem Submodul 21 gemäß Figur 10, das also als Halbbrückenschaltung realisiert ist, kann bei entsprechender Polarität ein Strom von der Submodulanschlussklemme 28 über die untere Freilaufdiode 27 in die Submodulanschlussklemme 29 fließen, ohne dass dieser aktiv unterbrochen werden kann. Ein Kurzschlussstrom in dieser Richtung kann daher nicht beeinflusst werden. Demgegenüber weist die Halbbrückenschaltung jedoch den Vorteil auf, dass diese lediglich zwei IGBTs und zwei Freilaufdioden für ihren Aufbau benötigt und somit wesentlich kostengünstiger herstellbar sind als die Vollbrückenschaltung gemäß Figur 11. Darüber hinaus sind die Verluste der Halbbrückenschaltung 21 geringer.

Ein Kompromiss zwischen beiden Ausgestaltungen, also der Halb- und der Vollbrückenschaltung, stellt das in Figur 12 gezeigte Submodul 23 dar, das auch als so genannte Doppelmodulschaltung bekannt ist. Die Doppelmodulschaltung 23 ist detailliert in der WO 2011/067120 beschrieben und besteht aus zwei identischen Untereinheiten 31 und 32, deren Topologie an diejenige einer Halbbrückenschaltung angelehnt ist. Die Untereinheiten 31 und 32 umfassen jeweils einen Energiespeicher 24 in Gestalt eines Kondensators sowie eine Reihenschaltung 25 aus zwei IGBTs 26 mit jeweils antiparalleler Freilaufdiode 27. Alternativ kommen rückwärts leitende Leistungshalbleiter in Betracht. Eine erste Submodulanschlussklemme 28 ist mit dem Potentialpunkt zwischen den IGBTs 26 der ersten Untereinheit 32 verbunden, wohingegen die zweite Submodulanschlussklemme 29 mit dem Potentialpunkt der IGBTs 26 der zweiten Untereinheit 31 verbunden ist. Die beiden Untereinheiten 31 und 32 sind über Verbindungsmittel 33 miteinander verbunden, wobei die Verbindungsmittel Potentialtrennungsdioden 34 sowie einen weiteren IGBT 26 in einem Mittelzweig 35 aufweisen, welcher die Kathode der unteren Potentialtrennungsdiode 34 mit der Anode der oberen Potentialtrennungsdiode 34 verbindet. Dieses Submodul 23 kann an seinem Submodulanschlussklemmen 18, 19 die gleichen Spannungen erzeugen, wie zwei in Reihe geschaltete Halbbrückenschaltungen 21 gemäß Figur 10, wobei jedoch die Verbindungsmittel 33 dafür sorgen, dass zu Kurzschlussströmen in beiden Richtungen ein Gegenpotential aufgebaut werden kann. Somit können Kurzschlussströme, die in beiden Richtungen über die Anschlussklemmen 28 und 29 fließen wollen, gezielt herabgesetzt oder sogar unterdrückt werden. Auf diese Eigenschaft wird später noch weiter eingegangen.

Wieder mit Bezug auf Figur 2 kann somit je nach Ansteuerung der Submodule 21, 22 oder 23 die zwischen dem jeweiligen Gleichspannungsanschluss 2, 5, 3 und dem jeweiligen Wechselspannungsanschluss 13 abfallende Spannung stufenweise variiert werden. Somit ist am Wechselspannungsanschluss 13 eines jeden Teilumrichters 8 bzw. 11 eine Wechselspannung erzeugbar.

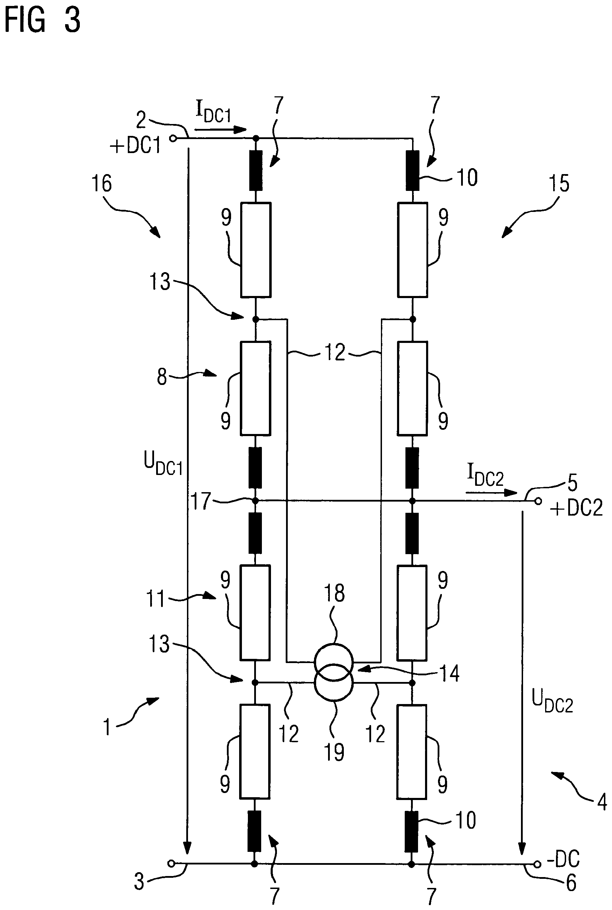

Figur 3 zeigt ein weiteres Ausführungsbeispiel des erfindungsgemäßen Gleichspannungswandlers 15 mit einer Umrichterreihenschaltung 16 aus zwei Teilumrichtern 8 und 11, wobei jeder der Teilumrichter 8 und 11 zwei Phasenmodule 7 aufweist, die jeweils eine Reihenschaltung von zwei Umrichterarmen 9 sowie zwei Induktivitäten 10 umfassen. Der zweite Teilumrichter 11 ist zwischen den der Gleichspannungsklemmen 5, 6 zweiten Gleichspannungsanschluss 4 und die Umrichterreihenschaltung 16 zwischen den Klemmen 2, 3 des ersten Gleichspannungsanschlusses 1 angeordnet. Dabei erstreckt sich der erste Teilumrichter 8 - wie in Figur 2 - zwischen der positiven Gleichspannungsklemme 2 des ersten Gleichspannungsanschlusses 1 und der positiven Gleichspannungsklemme 5 des zweiten Gleichspannungsanschlusses 4. Die Umrichterarme 9 entsprechen in ihrem Aufbau den bereits im Zusammenhang mit Figur 2 gewürdigten Umrichterarmen 9. Aufgrund der reduzierten Anzahl von Phasenmodulen 7 ist bei dem Ausführungsbeispiel gemäß Figur 3 lediglich ein einphasiger Transformator 14 mit einer einzigen Primärwicklung 18 und einer einzigen Sekundärwicklung 19 vorgesehen. Die Primärwicklung 18 weist zwei Transformatoranschlussklemmen auf, wobei eine Transformatoranschlussklemme mit der Wechselspannungsphase 12 des ersten Phasenmoduls 7 des ersten Teilumrichters 8 und die andere Transformatoranschlussklemme mit der Wechselspannungsphase 12 des zweiten Submoduls 7 des ersten Teilumrichters 8 verbunden ist. Ein entsprechender Anschluss ergibt sich für die Sekundärwicklung 19 mit ihren zwei Transformatoranschlussklemmen, wobei eine der Transformatoranschlussklemmen mit der Wechselspannungsphase 12 des ersten Phasenmoduls 7 des zweiten Teilumrichters und die andere Transformatoranschlussklemme mit der Wechselspannungsphase 12 des zweiten Phasenmoduls 7 des zweiten Teilumrichters 11 verbunden ist. Aufgrund dieser zwei- bzw. einphasigen Ausgestaltung ist der Gleichspannungswandler 15 gemäß Figur 3 im Vergleich zu demjenigen in Figur 2 wesentlich kostengünstiger, wobei jedoch der maximale Leistungsfluss beim Gleichspannungswandler 15 gemäß Figur 3 herabgesetzt ist.

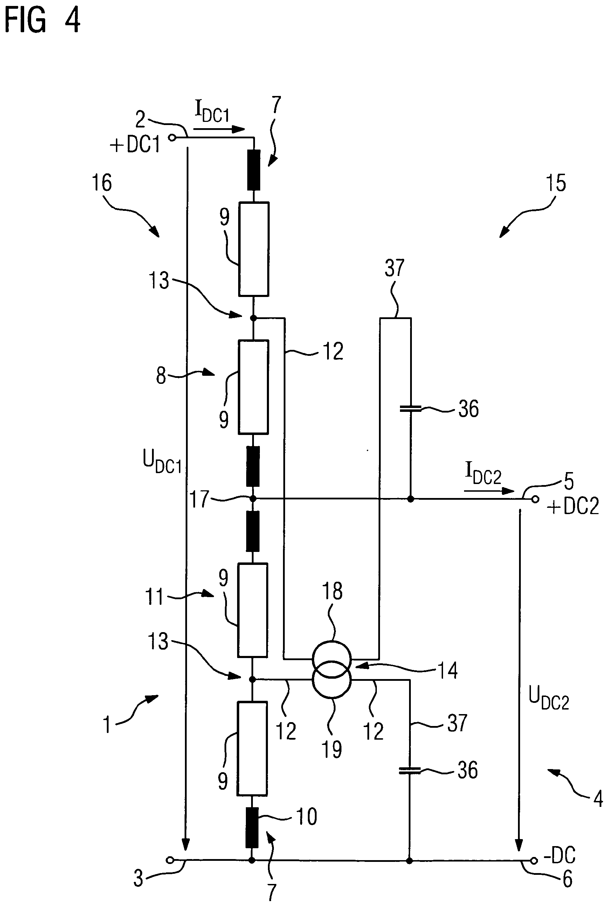

Figur 4 zeigt ein weiteres Ausführungsbeispiel des erfindungsgemäßen Gleichspannungswandlers 15, der sich von dem in Figur 3 gezeigten Gleichspannungswandler 15 dadurch unterscheidet, dass jeder der Teilumrichter 8 bzw. 11 lediglich ein Phasenmodul 7 aufweist. Statt eines zweiten Phasenmoduls verfügt jeder Teilumrichter 8 bzw. 11 über einen Kondensator 36, der mit der positiven Gleichspannungsklemme 5 des zweiten Gleichspannungsanschlusses 4 sowie mit der beiden Gleichspannungsanschlüssen gemeinsamen negativen Gleichspannungsklemme 3, 6 verbunden ist, wobei der andere Pol des jeweiligen Kondensators 36 eine Kondensatorhilfsphase 37 ausbildet, die der Wechselspannungsphase 12 des jeweiligen Teilumrichters 8 bzw. 11 ist in dem Sinne fest zugeordnet, dass die Transformatoranschlussklemme der Primärwicklung 18 mit der Wechselspannungsphase 12 des ersten Teilumrichters 8 und die andere Transformatoranschlussklemme der Primärwicklung 18 mit der Kondensatorhilfsphase des ersten Teilumrichters 8 verbunden ist. Entsprechendes gilt für den zweiten Teilumrichter 11 bzw. der Sekundärwicklung 19 des einphasigen Transformators 14. Die Kosten des Gleichspannungswandlers 15 gemäß Figur 4 konnten gegenüber demjenigen in Figur 3 noch weiter herabgesetzt werden.

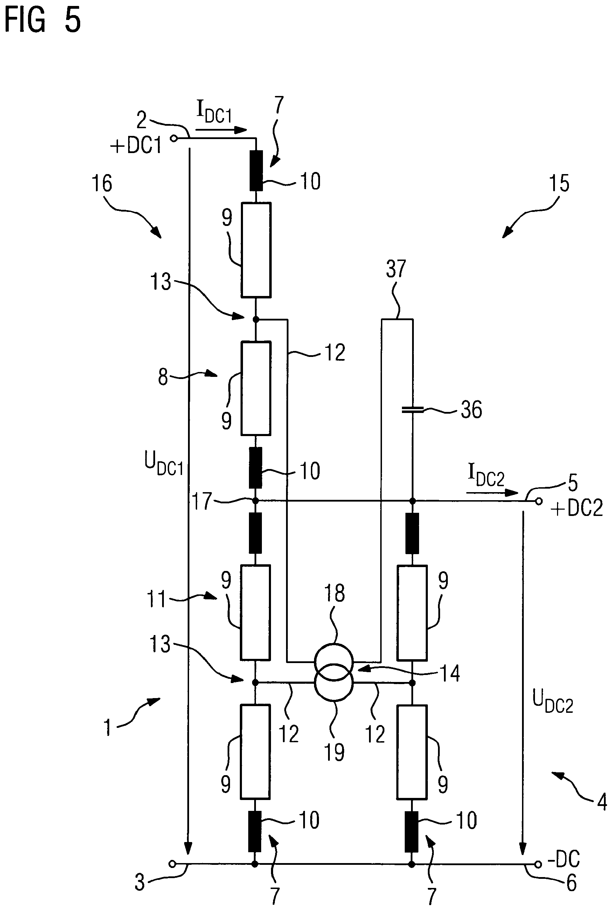

Figur 5 zeigt ein weiteres Ausführungsbeispiel des erfindungsgemäßen Gleichspannungswandlers 15, der sich von dem in Figur 4 gezeigten Ausführungsbeispiel dahingehend unterscheidet, dass lediglich der erste Teilumrichter 8 eine Kondensatorhilfsphase 37 mittels eines Kondensators 36 ausbildet, der mit der positiven Gleichspannungsklemme 5 des zweiten Gleichspannungsanschlusses 4 verbunden ist. Der zweite Teilumrichter 11 weist hingegen wie derjenige in Figur 3 gezeigte zweite Teilumrichter 11 zwei Phasenmodule 7 mit zwei Wechselspannungsphasen 12 auf, die jeweils mit einer Transformatoranschlussklemme der Sekundärwicklung verbunden sind.

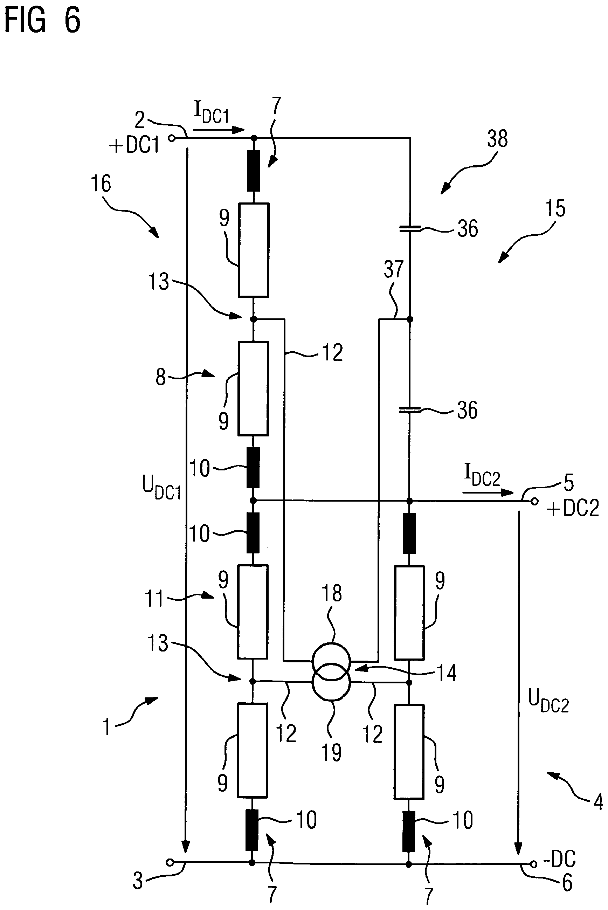

Die Figur 6 zeigt ein weiteres Ausführungsbeispiel des erfindungsgemäßen Gleichspannungswandlers 15, wobei der zweite Teilumrichter 11 wie derjenige in Figur 5 gezeigte Teilumrichter 11 zwei Phasenmodule 7 mit zwei Wechselspannungsphasen 12 aufweist. Der erste Teilumrichter 8 verfügt jedoch über zwei Kondensatoren 36, die miteinander unter Ausbildung einer Kondensatorreihenschaltung 38 in Reihe geschaltet sind. Die Kondensatorreihenschaltung 38 erstreckt sich somit zwischen der positiven Gleichspannungsklemme 2 des ersten Gleichspannungsanschlusses 1 und der positiven Gleichspannungsklemme 5 des zweiten Gleichspannungsanschlusses 4. Somit ist die Kondensatorreihenschaltung 38 dem Phasenmodul 7 einschließlich der Induktivitäten 10 des ersten Teilumrichters 8 parallel geschaltet. Der Potentialpunkt zwischen den Kondensatoren 36 der Kondensatorreihenschaltung 38 bildet wieder eine Kondensatorhilfsphase 37 aus, die - wie bereits im Zusammenhang mit den Figuren 4 und 5 ausgeführt wurde - mit einer Transformatoranschlussklemme der Primärwicklung 18 des Transformators 14 verbunden ist. Durch Einsatz von zwei Kondensatoren 36 kann das Potential der Kondensatorhilfsphase 37 stabiler eingestellt werden.

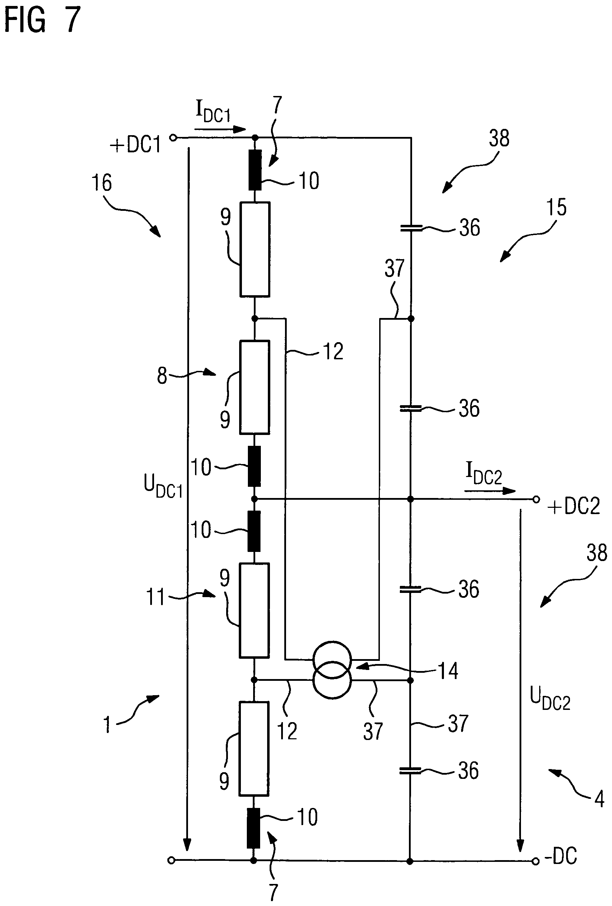

In Figur 7 zeigt ein weiteres Ausführungsbeispiel des erfindungsgemäßen Gleichspannungswandlers, wobei jedoch auch der zweite Teilumrichter 11 anstelle eines zweiten Phasenmoduls 7 wie in Figur 6 eine Kondensatorreihenschaltung 38 aufweist, die dem Phasenmodul 7 einschließlich Induktivität 10 parallel geschaltet ist. Somit bildet auch der zweite Teilumrichter 11 eine Kondensatorhilfsphase 37 aus, deren Potential durch eine Reihenschaltung von zwei Kondensatoren 36 bestimmt ist.

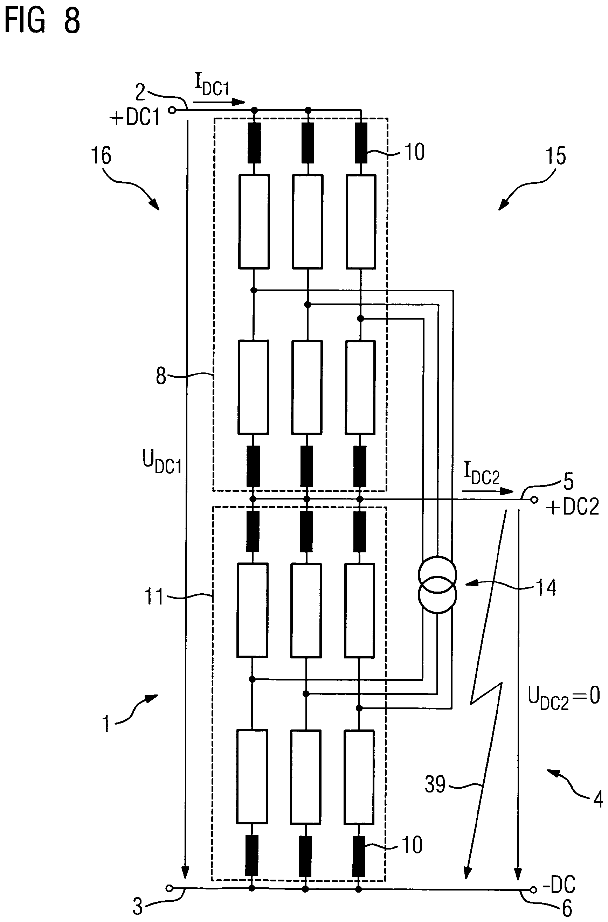

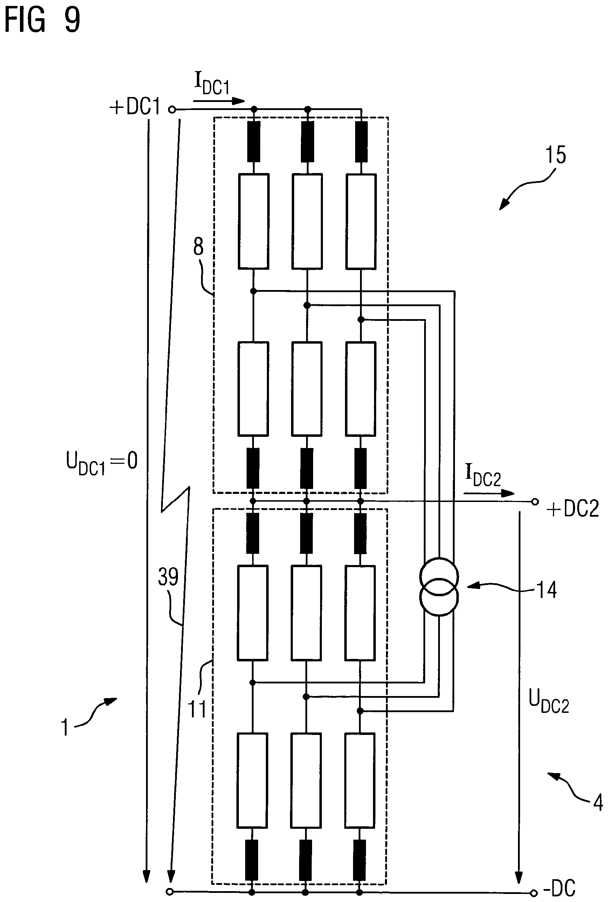

Die Figuren 8 und 9 verdeutlichen die Wirkungsweise des Gleichspannungswandlers gemäß Figur 2, wobei dessen erster Teilumrichter 8 Umrichterarme 9 gemäß Figur 13 aufweist. Die Umrichterarme 9 des zweiten Teilumrichters 11 sind hingegen ausschließlich durch Submodule 21 in Halbbrückenschaltung gemäß Figur 10 realisiert. Der erste Teilumrichter 8 unterscheidet sich daher vom zweiten Teilumrichter 11 dadurch, dass seine Umrichterarme 9 sowohl Submodule 22 in Vollbrückenschaltung gemäß Figur 11 als auch Submodule 21 in Halbbrückenschaltung gemäß Figur 10 aufweisen. Wie bereits ausgeführt wurde, ist die Vollbrückenschaltung bidirektional sperrfähig, kann also in beiden Richtungen über ihre Anschlussklemmen 28 und 29 fließende Ströme gezielt abschalten.

Wie bereits erläutert wurde, ist erfindungsgemäß ist der erste Gleichspannungsanschluss 1 zum Anschluss eines ersten Gleichspannungsnetzes mit der Nennspannung $U_{DC1}$ vorgesehen. Der zweite Gleichspannungsanschluss 4 dient zum Anschluss eines zweiten Gleichspannungsnetzes mit der Nennspannung $U_{DC2}$. Dabei bildet erfindungsgemäß der Gleichspannungsanschluss 1 die Oberspannungsseite aus, während der zweite Gleichspannungsanschluss 4 auch als Unterspannungsseite bezeichnet werden kann. In dem in Figur 8 gezeigten Ausführungsbeispiel liegt im zweiten Gleichspannungsnetz, also an der Unterspannungsseite und somit am zweiten Gleichspannungsanschluss 4 ein Kurzschluss 39 vor, so dass die am zweiten Gleichspannungsanschluss 4 abfallende Spannung $U_{DC2}$ gleich Null ist. Der Gleichspannungswandler 5 kann den Kurzschluss an der Unterspannungsseite isolieren, wenn die Spannung an der Oberspannungsseite, also die Nennspannung, am ersten Gleichspannungsanschluss 1 $U_{DC1}$ größer oder gleich dem Doppelten der Gleichspannung $U_{DC2}$ an dem zweiten Gleichspannungsanschluss 4 ist. Das ergibt sich aus folgender Überlegung: Ist für die am ersten Teilumrichter 8 abfallende Spannung $U_{up}$, ergibt sich diese Spannung aus der Differenz der Nennspannungen der angeschlossenen Netze gemäß

$$U_{up} = U_{DC1} - U_{DC2} \; .$$

Definiert man das Übertragungsverhältnis *ü* als  $\ddot{u} = \dfrac{U_{DC1}}{U_{DC2}}$  ergibt sich:

$$U_{up} = U_{DC1}\left(1 - \frac{1}{\ddot{u}}\right) = U_{DC1}\left(\frac{\ddot{u}-1}{\ddot{u}}\right) \; .$$

Für $\ddot{u} \geq 2$ kann folglich jeder Umrichterarm 9 des ersten Teilumrichters 8 die halbe Spannung $U_{DC1}$ sperren. Somit können zwei Umrichterarme 9 in Reihe, die gesamte Spannung $U_{DC1}$ sperren.

Figur 9 zeigt einen Kurzschluss 39 an der Oberspannungsseite also im ersten Gleichspannungsnetz, das an dem Gleichspannungsanschluss 1 anliegt. Um eine wirksame Isolation der Oberspannungsseite erreich zu können, müssen im ersten Teilumrichter 8 eine ausreichende Anzahl von bidirektional sperrenden Submodulen 22 oder 23 gemäß der Figuren 11 oder 12 angeordnet sein, um die Spannung der Unterspannungsseite vollständig aufnehmen zu können. Sei $U_m$ die Spannung, die jedes Submodul 22 oder 23 maximal sperren kann, so ergibt sich die notwendige Anzahl $n_{VB}$ der bidirektional sperrenden Submodule 22 oder 23, in einem Umrichterarm 9 des ersten Teilstromrichters 8 gemäß:

$$n_{VB} = \frac{U_{DC2}}{2U_m}$$

Für die Anzahl der Halbbrückenmodule in einem Umrichterarm 9 des ersten Teilumrichters 8 ergibt sich:

$$n_{HB} = \frac{U_{DC1} - U_{DC2}}{U_m} - \frac{U_{DC2}}{2U_m} = \frac{2U_{DC1} - 3U_{DC2}}{2U_m} = \frac{U_{DC1}}{U_m}\left(\frac{2\ddot{u}-3}{2\ddot{u}}\right)$$

Werden die in Abhängigkeit des Übertragungsverhältnisses ü angegebenen Bedingungen eingehalten, könne Kurzschlussströme beidseitig des Gleichspannungswandlers sicher blockiert werden.

Figur 14 zeigt eine weitere Variante der Erfindung. Der dort gezeigte Gleichspannungswandler 15 verfügt wieder über zwei unter Ausbildung einer Umrichterreihenschaltung 16 in Reihe geschaltete Teilumrichter 8, 11. Jeder Teilumrichter 8, 11 verfügt über ein einzelnes Phasenmodul 7, das zwei Umrichterarme 9 und einen Wechselspannungsanschluss 13 mit einer Wechselspannungsphase 12 aufweist, die zwischen den Umrichterarmen 9 angeordnet ist. Als Leistungsaustauschmittel ist ein Spartransformator 40 vorgesehen. Der Spartransformator 40 weist nur eine einzelne Wicklung mit einer Anzapfung 41 auf. Eine endseitige Transformatoranschlussklemme des Spartransformators 40 ist mit der positiven Gleichspannungsanschlussklemme 5 des Gleichspannungsanschlusses 4 verbunden. Die andere endseitigen Transformatoranschlussklemme und die Anzapfung 41 sind jeweils über einen Kondensator 36 an den Wechselspannungsanschluss 13 des ersten beziehungsweise zweiten Teilumrichters 11 angeschlossen. Die beiden Kondensatoren 36 dienen hier als Mittel zum Trennen der Gleichspannungspotentiale der Teilumrichter 8 und 11.

**Patentansprüche**

**1.**  Gleichspannungsumwandler (15) zum Verbinden von unterschiedliche Spannungen aufweisenden Hochspannungsgleichstromnetzen mit einem ersten Teilumrichter (8) und einem zweiten Teilumrichter (11), die miteinander unter Ausbildung einer Umrichterreihenschaltung (16) in Reihe geschaltet sind, wobei sich die Umrichterreihenschaltung (16) zwischen den Gleichspannungsklemmen (2, 3) eines Gleichspannungsanschlusses (1) und der zweite Teilumrichter (11) sich zwischen den Gleichspannungsklemmen (5, 6) eines zweiten Gleichspannungsanschlusses (4) erstreckt, wobei
der erste Teilumrichter (8) und der zweite Teilumrichter (11) über Leistungsaustauschmittel (14) miteinander verbunden sind, so dass der Austausch von elektrischer Leistung zwischen dem ersten Teilumrichter (8) und dem zweiten Teilumrichter (11) über die Leistungsaustauschmittel (14) ermöglicht ist,
**dadurch gekennzeichnet, dass**

der erste Teilumrichter (8) und/oder der zweite Teilumrichter (11) jeweils selbstgeführte modulare Mehrstufen-Umrichter sind, die Umrichterarme (9) mit einer Reihenschaltung von zweipoligen Submodulen aufweisen, wobei jedes Submodul (21, 22, 23) mit wenigstens einem Energiespeicher (24) und ein- und abschaltbaren Leistungshalbleiterschaltern (26) ausgerüstet ist, wobei jedes Submodul eine Vollbrückenschaltung, eine Doppelmodulschaltung und/oder eine Halbbrückenschaltung ausbildet.

2. Gleichspannungswandler (15) nach Anspruch 1,
   **dadurch gekennzeichnet, dass**
   jeder Teilumrichter (8, 11) einen Wechselspannungsanschluss (13) ausbildet, wobei der Wechselspannungsanschluss (13) des ersten Teilumrichters (8) mit dem Wechselspannungsanschluss (13) des zweiten Teilumrichters (11) über die Leistungsaustauschmittel (14) verbunden ist.

3. Gleichspannungswandler (15) nach Anspruch 2,
   **dadurch gekennzeichnet, dass**
   die Leistungsaustauschmittel als ein Transformator (14) ausgebildet sind.

4. Gleichspannungswandler (15) nach Anspruch 3,
   **dadurch gekennzeichnet, dass**
   der Transformator (14) eine Primärwicklung (18), die mit dem Wechselspannungsanschluss (13) des ersten Teilumrichters (8) verbunden ist, und eine Sekundärwicklung (19) aufweist, die mit dem Wechselspannungsanschluss (12) des zweiten Teilumrichters (11) verbunden ist.

5. Gleichspannungswandler (15) nach einem der vorhergehenden Ansprüche,
   **dadurch gekennzeichnet, dass**
   jeder Teilumrichter (8, 11) wenigstens ein Phasenmodul (7) aufweist, das zwei in Reihe geschaltete Umrichter (9) ausbildet, wobei der Potentialpunkt zwischen den Umrichterarmen (9) eines jeden Phasenmoduls (7) eine Wechselspannungsphase (12) eines Wechselspannungsanschlusses (13) ausbildet.

6. Gleichspannungswandler (15) nach Anspruch 5,
   **dadurch gekennzeichnet, dass**
   jeder Teilumrichter (8, 11) drei Phasenmodule (7) ausbildet, deren Wechselspannungsanschlüsse (12) über einen dreiphasigen Transformator (14) miteinander gekoppelt sind.

7. Gleichspannungswandler (15) nach Anspruch 5,
   **dadurch gekennzeichnet, dass**
   zumindest ein Teilumrichter (8, 11) zwei Phasenmodule (7) ausbildet, deren Wechselspannungsanschluss (13) über einen einphasigen Transformator (4) mit dem Wechselspannungsanschluss (13) des anderen Teilumrichters (8, 11) gekoppelt ist.

8. Gleichspannungswandler (15) nach Anspruch 5 oder 7,
   **dadurch gekennzeichnet, dass**
   jeder oder zumindest einer der Teilumrichter (8, 11) lediglich ein Phasenmodul (7) aufweist, dessen Wechselspannungsphase (12) einer Kondensatorhilfsphase (37) zugeordnet ist, die über einen Kondensator (36) mit einer Gleichspannungsklemme (2, 3, 5, 6) des ersten oder zweiten Gleichspannungsanschlusses (1, 4) verbunden ist, wobei die besagte Wechselspannungsphase (12) und die diesem zugeordnete Kondensatorhilfsphase (37) über eine Wicklung (18, 19) eines einphasigen Transformators (14) miteinander verbunden sind.

9. Gleichspannungswandler (15) nach einem der vorangehenden Ansprüche,
   **dadurch gekennzeichnet, dass**
   in jedem Umrichterarm (9) des ersten Teilumrichters (8) sowohl bidirektional sperrfähige Submodule (22, 23) als auch Submodule mit Halbbrückenschaltung vorgesehen sind.

10. Gleichspannungswandler (15) nach einem der vorangehenden Ansprüche,
    **dadurch gekennzeichnet, dass**
    der zweite Teilumrichter (11) ausschließlich Submodule mit Halbbrückenschaltung (21) aufweist, wobei das Übersetzungsverhältnis (ü) zwischen dem ersten Gleichspannungsanschluss (1) und dem zweiten Gleichspannungsanschluss (4) gleich oder größer als 2 ist.

**11.** Gleichspannungswandler (15) nach einem der vorangehenden Ansprüche,
**dadurch gekennzeichnet, dass**
die Anzahl der bidirektional sperrfähigen Submodule ($n_{VB}$) sich gemäß

$$n_{VB} = \frac{U_{DC2}}{2_{Um}}$$

ergibt, wobei $U_{DC2}$ die Nennspannung des zweiten Gleichspannungsnetzes, und Um die an dem Energiespeicher des bidirektional sperrfähigen Submoduls (22, 23) abfallende Spannung sind.

**12.** Gleichspannungswandler (15) nach einem der vorangehenden Ansprüche,
**dadurch gekennzeichnet, dass**
die Anzahl der Submodule mit Halbbrückenschaltung (21) ($n_{HB}$) in jedem Umrichterarm (9) des ersten Teilumrichters (8) sich gemäß der Gleichung

$$n_{HB} = \frac{U_{DC1}}{U_m}\left(\frac{2\ddot{u}-3}{2\ddot{u}}\right)$$

ergibt, wobei $U_{DC1}$ die Nennspannung des am ersten Gleichspannungsanschluss (1) anliegenden Gleichspannungsnetzes und ü das Übersetzungsverhältnis des Gleichspannungswandlers (15) ist.

**13.** Gleichspannungswandler (15) nach Anspruch 1, 2 oder 3,
**dadurch gekennzeichnet, dass**
die Leistungsaustauschmittel einen Spartransformator (40) aufweisen, der über Mittel zum Trennen von Gleichspannungspotentialen (36) mit den Teilumrichtern (8,11) verbunden ist.

## Claims

**1.** DC-to-DC voltage converter (15) for connecting HVDC grids having different voltages, said DC-to-DC voltage converter having a first partial converter (8) and a second partial converter (11) which are connected in series with one another to form a converter series circuit (16), wherein the converter series circuit (16) extends between the DC voltage terminals (2, 3) of a DC voltage connection (1) and the second partial converter (11) extends between the DC voltage terminals (5, 6) of a second DC voltage connection (4), wherein
the first partial converter (8) and the second partial converter (11) are connected to one another via power exchange means (14), with the result that the exchange of electric power between the first partial converter (8) and the second partial converter (11) via the power exchange means (14) is made possible,
**characterized in that**
the first partial converter (8) and/or the second partial converter (11) are in each case self-commutated modular multilevel converters, which have converter arms (9) having a series circuit composed of two-pole submodules, wherein each submodule (21, 22, 23) is equipped with at least one energy store (24) and power semiconductor switches (26) which can be switched on and off, wherein
each submodule forms a full-bridge circuit, a double-module circuit and/or a half-bridge circuit.

**2.** DC-to-DC voltage converter (15) according to Claim 1,
**characterized in that**
each partial converter (8, 11) forms an AC voltage connection (13), wherein the AC voltage connection (13) of the first partial converter (8) is connected to the AC voltage connection (13) of the second partial converter (11) via the power exchange means (14) .

**3.** DC-to-DC voltage converter (15) according to Claim 2,
**characterized in that**
the power exchange means are designed as a transformer (14).

**4.** DC-to-DC voltage converter (15) according to Claim 3,
**characterized in that**

the transformer (14) has a primary winding (18), which is connected to the AC voltage connection (13) of the first partial converter (8), and a secondary winding (19), which is connected to the AC voltage connection (12) of the second partial converter (11) .

5. DC-to-DC voltage converter (15) according to any of the preceding claims,
   **characterized in that**
   each partial converter (8, 11) has at least one phase module (7) which forms two series-connected converters (9), wherein the potential point between the converter arms (9) of a respective phase module (7) forms an AC voltage phase (12) of an AC voltage connection (13).

6. DC-to-DC voltage converter (15) according to Claim 5,
   **characterized in that**
   each partial converter (8, 11) forms three phase modules (7), the AC voltage connections (13) of which are coupled to one another via a three-phase transformer (14).

7. DC-to-DC voltage converter (15) according to Claim 5,
   **characterized in that**
   at least one partial converter (8, 11) forms two phase modules (7), the AC voltage connection (13) of which is coupled to the AC voltage connection (13) of the other partial converter (8, 11) via a single-phase transformer (4).

8. DC-to-DC voltage converter (15) according to Claim 5 or 7,
   **characterized in that**
   each partial converter or at least one of the partial converters (8, 11) has only one phase module (7), the AC voltage phase (12) of which is assigned to a capacitor auxiliary phase (37), which is connected to a DC voltage terminal (2, 3, 5, 6) of the first or second DC voltage connection (1, 4) via a capacitor (36), wherein said AC voltage phase (12) and the capacitor auxiliary phase (37) assigned thereto are connected to one another via a winding (18, 19) of a single-phase transformer (14).

9. DC-to-DC voltage converter (15) according to any of the preceding claims,
   **characterized in that**
   both bidirectionally blocking submodules (22, 23) and submodules with half-bridge circuits are provided in each converter arm (9) of the first partial converter (8).

10. DC-to-DC voltage converter (15) according to any of the preceding claims,
    **characterized in that**
    the second partial converter (11) exclusively has submodules with half-bridge circuits (21), wherein the translation ratio (ü) between the first DC voltage connection (1) and the second DC voltage connection (4) is greater than or equal to 2.

11. DC-to-DC voltage converter (15) according to any of the preceding claims,
    **characterized in that**
    the number ($n_{VB}$) of bidirectionally blocking submodules is given by

$$n_{VB} = \frac{U_{DC2}}{2_{Um}}$$

,

wherein $U_{DC2}$ is the nominal voltage of the second DC voltage grid and Um is the voltage dropping across the energy store of the bidirectionally blocking submodule (22, 23).

12. DC-to-DC voltage converter (15) according to any of the preceding claims,
    **characterized in that**
    the number ($n_{HB}$) of submodules with half-bridge circuits (21) in each converter arm (9) of the first partial converter (8) is given according to the equation

$$n_{HB} = \frac{U_{DC1}}{U_m}\left(\frac{2\ddot{u}-3}{2\ddot{u}}\right),$$

wherein $U_{DC1}$ is the nominal voltage of the DC voltage grid present at the first DC voltage connection (1) and ü is the translation ratio of the DC-to-DC voltage converter (15).

**13.** DC-to-DC voltage converter (15) according to Claim 1, 2 or 3,
**characterized in that**
the power exchange means have an autotransformer (40) which is connected to the partial converters (8, 11) via means for isolating DC voltage potentials (36).

**Revendications**

**1.** Transformateur (15) de tension continue pour relier des réseaux de courant continu de haute tension ayant des tensions différentes à un premier transformateur (8) partiel et à un deuxième transformateur (11) partiel, qui sont montés entre eux en série avec formation d'un circuit (16) série de transformateur, le circuit (16) série de transformateur s'étendant entre les bornes (2, 3) de tension continue d'une connexion (1) de tension continue et le deuxième transformateur (11) partiel s'étendant entre les bornes (5, 6) de tension continue d'une deuxième connexion (4) de tension continue, dans lequel
le premier transformateur (8) partiel et le deuxième transformateur (11) partiel sont reliés entre eux par des moyens (14) d'échange de puissance, de manière à permettre l'échange de puissance électrique entre le premier transformateur (8) partiel et le deuxième transformateur (11) partiel, par l'intermédiaire des moyens (14) d'échange de puissance,
**caractérisé en ce que**
le premier transformateur (8) partiel et /ou le deuxième transformateur (11) partiel sont des transformateurs à plusieurs niveaux modulaires à commutation autonome, les bras (9) d'transformateur ont un circuit série de sous-modules bipolaires, chaque sous -module (21, 22, 23) étant équipé d'au moins un accumulateur (24) d'énergie et d'interrupteurs (26) à semi -conducteur de puissance pouvant être fermés et ouverts, chaque sous -module formant un circuit en pont complet, un circuit à module double et /ou un circuit en demi -pont.

**2.** Transformateur (15) de tension continue suivant la revendication 1,
**caractérisé en ce que**
chaque transformateur (8, 11) partiel constitue une borne (13) de tension alternative, la borne (13) de tension alternative du premier transformateur (8) partiel étant reliée à la borne (13) de tension alternative du deuxième transformateur (11) partiel par l'intermédiaire des moyens (14) d'échange de puissance.

**3.** Transformateur (15) de tension continue suivant la revendication 2,
**caractérisé en ce que** les moyens d'échange de puissance sont constitués sous la forme d'un transformateur (14).

**4.** Transformateur (15) de tension continue suivant la revendication 3,
**caractérisé en ce que**
le transformateur (14) a un enroulement (18) primaire, qui est relié à la borne (13) de tension alternative du premier transformateur (8) partiel, et un enroulement (19) secondaire, qui est relié à la borne (12) de tension alternative du deuxième transformateur (11) partiel.

**5.** Transformateur (15) de tension continue suivant l'une des revendications précédentes,
**caractérisé en ce que**
chaque transformateur (8, 11) partiel a au moins un module (7) de phase, qui constitue deux transformateurs (9) montés en série, le point de potentiel entre les bras (9) d'transformateur de chaque module (7) de phase, en constituant une phase (12) de tension alternative d'une borne (13) de tension alternative.

**6.** Transformateur (15) de tension continue suivant la revendication 5,
**caractérisé en ce que**
chaque transformateur (8, 11) partiel constitue trois modules (7) de phase, dont les bornes (12) de tension alternative sont couplées entre elles par l'intermédiaire d'un transformateur (14) triphasé.

**7.** Transformateur (15) de tension continue suivant la revendication 5,
**caractérisé en ce qu'**
au moins un transformateur (8, 11) partiel constitue deux modules (7) de phase, dont la borne (13) de tension alternative est reliée par un transformateur (4) monophasé à la borne (13) de tension alternative de l'autre transformateur (8, 11) partiel.

**8.** Transformateur (15) de tension continue suivant la revendication 5 ou 7,
**caractérisé en ce que**
chaque transformateur (8, 11) partiel, ou au moins l'un d'entre eux, a simplement un module (7) de phase, dont la phase (12) de tension alternative est associée à une phase (37) auxiliaire de condensateur, qui est reliée, par l'intermédiaire d'un condensateur (36), à une borne (2, 3, 5, 6) de tension alternative de la première ou de la deuxième connexion (1, 4) de tension continue, lesdites phases (12) de tension alternative et la phase (37) auxiliaire de condensateur qui leur est associée étant reliées entre elles par un enroulement (18, 19) d'un transformateur (14) monophasé.

**9.** Transformateur (15) de tension continue suivant l'une des revendications précédentes,
**caractérisé en ce que**, dans chaque bras (9) d'transformateur du premier transformateur (8) partie, il est prévu à la fois des sous -modules (22, 23) pouvant être bloqués bidirectionnellement et des sous -modules à circuit en demi - pont.

**10.** Transformateur (15) de tension continue suivant l'une des revendications précédentes,
**caractérisé en ce que**
le deuxième transformateur (11) partiel a, exclusivement, des sous -modules à circuit (21) en demi -pont, le rapport (ü) de multiplication entre la première connexion (1) de tension continue et la deuxième connexion (4) de tension continue étant supérieur ou égal à 2.

**11.** Transformateur (15) de tension continue suivant l'une des revendications précédentes,
**caractérisé en ce que**
le nombre des sous -modules ($n_{VB}$) pouvant être bloqués bidirectionnellement est donné par

$$n_{VB} \;=\; \frac{U_{DC2}}{2_{Um}}$$

dans laquelle $U_{DC2}$ est la tension nominale du deuxième réseau de tension continue, et Um est la tension chutant aux bornes de l'accumulateur d'énergie du sous -module (22, 23) pouvant être bloqué bidirectionnellement.

**12.** Transformateur (15) de tension continue suivant l'une des revendications précédentes,
**caractérisé en ce que**
le nombre des sous -modules ($n_{HB}$) à circuit (21) en demi - pont dans chaque bras (9) du premier transformateur (8) partiel est donné par l'équation

$$n_{HB} \;=\; \frac{U_{DC1}}{U_m}\left(\frac{2\ddot{u}-3}{2\ddot{u}}\right)$$

dans laquelle $U_{DC1}$ est la tension nominale du réseau de tension continue s'appliquant à la première connexion (1) de tension continue et ü est le rapport de multiplication du transformateur (15) de tension continue.

**13.** Transformateur (15) de tension continue suivant la revendication 1, 2 ou 3,
**caractérisé en ce que**
les moyens d'échange de puissance ont un autotranformateur (40), qui est relié aux transformateurs (8, 11) partiels par l'intermédiaire de moyens de séparation de potentiel (36) de tension continue.

# FIG 1 (Stand der Technik)

FIG 2

# FIG 3

# FIG 4

FIG 5

# FIG 6

# FIG 7

# FIG 8

# FIG 9

FIG 10

FIG 11

FIG 12

## FIG 13

# FIG 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010145690 A1
- WO 2010115452 A
- EP 2458725 A1
- US 3942089 A
- WO 2012103936 A1
- US 6519169 B1
- US 20120170338 A1
- WO 2011060812 A1
- WO 2011067120 A

**In der Beschreibung aufgeführte Nicht-Patentliteratur**

- **KNUDSEN et al.** Description and Perspective Applications of New Multilevel-Terminal HVDC System Concepts. *CIGRE CONF.,* 1990